# EUROPEAN PATENT APPLICATION

(11) **EP 0 711 913 A1**
(43) Date of publication of application: **15.05.1996**
(21) Application number: 94203307.7
(22) Date of filing: 11.11.1994
(51) Int. Cl.: F02M 21/00, F02M 21/02

(54) **System for supplying a gaseous fuel and evaporating and pressure regulating device for use therein**

(71) Applicant: Autogastechniek Holland B.V., NL-3925 BV Scherpenzeel (NL)
(72) Inventor: van den Brink, Alfred, NL-3773 AR Barneveld (NL)
(74) Representative: Bartelds, Erik

(57) **Abstract**

The invention relates to a system for metered supply to a combustion engine (2) of a fuel which is gaseous in ambient conditions, provided with a container (3) for storing the fuel in liquid form, a mixing device (5) arranged in an air intake channel (4) of the engine (2), a fuel supply line (6) connecting the container (3) to the mixing device (5), and a device (7) arranged in the fuel supply line (6) for evaporating the fuel and regulating the pressure thereof. This evaporating and pressure regulating device (7) comprises an evaporation space (40) with a primary intake aperture (41) closable by a controllable valve (42) and an outlet aperture (47,48,49), wherein the valve (42) is controlled by an underpressure prevailing in the air intake channel (4) of the engine (2). The system further comprises an adjustable throttle valve arranged between the evaporating and pressure regulating device (7) and the mixing device (5), which throttle valve is electronically controllable and connected for receiving signals from an electronic engine control unit (8). The evaporating and pressure regulating device (7) further has electronically controllable means for supplying an additional amount of fuel to the mixing device (5).

The invention also relates to an evaporating and pressure regulating device (7) for use in such a system (1).

## Description

The invention relates to a system for metered supply to a combustion engine of a fuel which is gaseous in ambient conditions, and to an evaporating and pressure regulating device for use in such a system.

The invention relates more particularly to a fuel supply system provided with a container for storing the fuel in liquid form, a mixing device arranged in an air intake channel of the engine, a fuel supply line connecting the container to the mixing device, a device arranged in the fuel supply line for evaporating the fuel and regulating the pressure thereof, which evaporating and pressure regulating device comprises at least one evaporation space with a primary intake aperture closable by a controllable valve and an outlet aperture, wherein the valve is controlled by an underpressure prevailing in the air intake channel of the engine, and an adjustable throttle valve arranged between the evaporating and pressure regulating device and the mixing device. Such a system is known and is generally applied as LPG installation for vehicles provided with a petrol engine with carburettor.

In the known system the throttle valve which determines the composition of the air-fuel mix supplied to the engine is generally adjustable by means of a screw. In addition to the primary gas feed which is controlled by the underpressure in the suction channel of the engine and which can therefore only be utilized when a sufficient underpressure has built up, such as during full load operation, the evaporating and pressure regulating device of such a known system also contains a secondary gas feed for situations where the underpressure in the air intake channel of the engine is insufficient, such as idling or partial load operation of the engine. Such a secondary gas feed is usually also provided with a throttle adjustable by means of a screw. Finally, the known system is often also provided with a valve driven by a solenoid for supply of extra fuel after a cold start of the engine. The passage of this valve is often also adjustable by means of a screw.

During use the different adjustments will be carried out by a service technician such that the engine runs regularly in all operational conditions. In practice, carrying out of such adjusting operations often takes place by ear or, in the most favourable case, on the basis of measurements of for instance the composition of the exhaust gases. During operation, however, the selected settings will often vary slightly in the course of time, while the once-only selected settings will be found moreover to be no longer optimal due to wear of the different parts of the fuel system and as a result of the not always constant composition of the fuel used, whereby the performance of the engine, fuel consumption and the composition of the exhaust gases will be adversely affected.

The invention therefore has for its object to provide a system for metered supply of fuel that is gaseous in ambient conditions, wherein this problem does not occur. This is achieved according to the invention in that the throttle valve is electronically controllable and connected for receiving signals from an electronic engine control unit and the evaporating and pressure regulating device further has electronically controllable means for supplying an additional amount of fuel to the mixing device. Due to the electronic control of both the throttle valve and the means for supplying additional fuel when the underpressure in the air intake channel of the engine is insufficient, such as during idling or after a cold start, there is no longer any need to carry out periodic adjustment operations and an optimum composition of the gas-air mixture supplied to the engine can be obtained under all operating conditions of the engine with a suitable control algorithm, whereby a high level of performance, low fuel consumption and minimum emission of harmful exhaust gases are always ensured.

Preferred embodiments of the system according to the invention are described in the sub-claims.

The invention further relates to an evaporating and pressure regulating device for use in a system as described above. Such a system is provided according to the invention with at least one evaporation space with a primary intake aperture closable by a valve controllable by underpressure and an outlet aperture, and electronically controllable means for supplying an additional amount of fuel to the engine.

The invention is now elucidated on the basis of an embodiment, wherein reference is made to the annexed drawing, in which:
Fig. 1 shows a schematic illustration of a fuel supply system according to the invention; and
Fig. 2 is a cross section through an evaporating and pressure regulating device used therein.

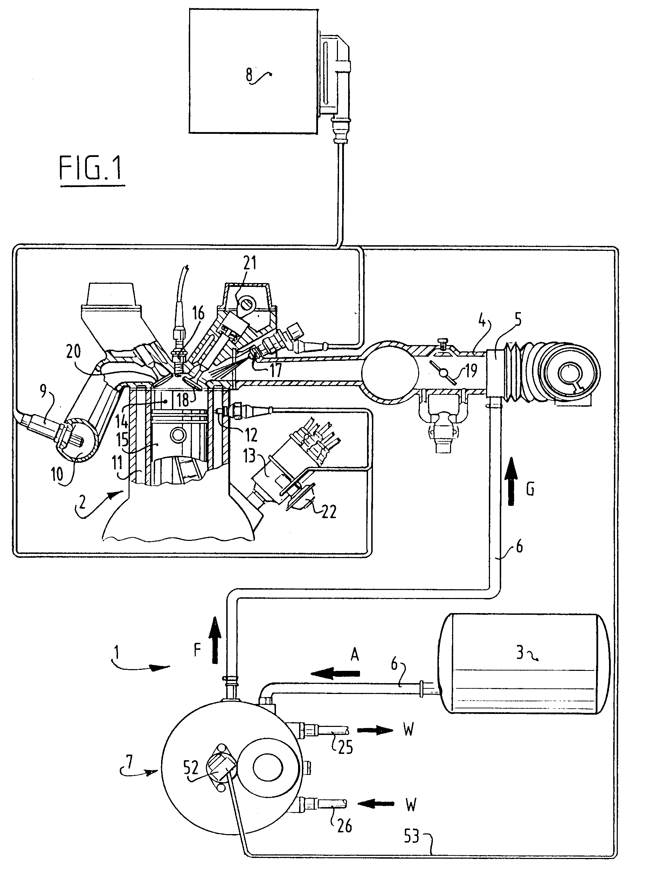

A system 1 for metered supply to a combustion engine 2 of a fuel that is gaseous in ambient conditions is provided with a container 3 for storing the fuel in liquid form and a mixing device 5 connected over a line 6 thereto for supplying the fuel to an air intake channel 4 of engine 2 (fig. 1). In order to enable feed of the fuel in gaseous form to engine 2 a device 7 is arranged between fuel container 3 and mixing device 5 for evaporating the fuel and regulating the pressure thereof. The operation of the gas dosing system 1 is controlled by an electronic engine control unit 8 which is supplied with information about the operation of engine 2 which comes from different sensors.

Engine 2 is a conventional petrol engine with a number of cylinders 14 (only one of which is shown here) in which a piston 15 moves in each case. In a manner known to a skilled person the engine 2 further has inlet valves 18 and outlet valves 20 which are operated by means of camshafts 21 (only one of which is shown here). For the petrol supply the engine is provided with injectors 17, while spark plugs 16 energized via a distributor 13 provide ignition of the air-fuel mixture in each of the cylinders 14. The supply of air to engine 2 is regulated by a valve 19 arranged in the air intake channel 4. The exhaust gases leave the engine 2 through an outlet channel 10 in which a so-called lambda sensor 9 is arranged for measuring the composition of the exhaust gases. This lambda sensor 9 is connected for signal generation to the electronic engine control unit 8. This unit 8 further receives signals from a sensor 22 connected to distributor 13, which signals indicate the ignition frequency and thus the rotation speed of the engine, and from a sensor 12 for measuring the temperature of the cooling water 11 of the engine. This cooling water 11 is otherwise used not only to cool the engine 2 but also to heat the evaporating and pressure regulating device 7, for which purpose the cooling water system of engine 2 is connected via connections 25,26 to the evaporating and pressure regulating device 7.

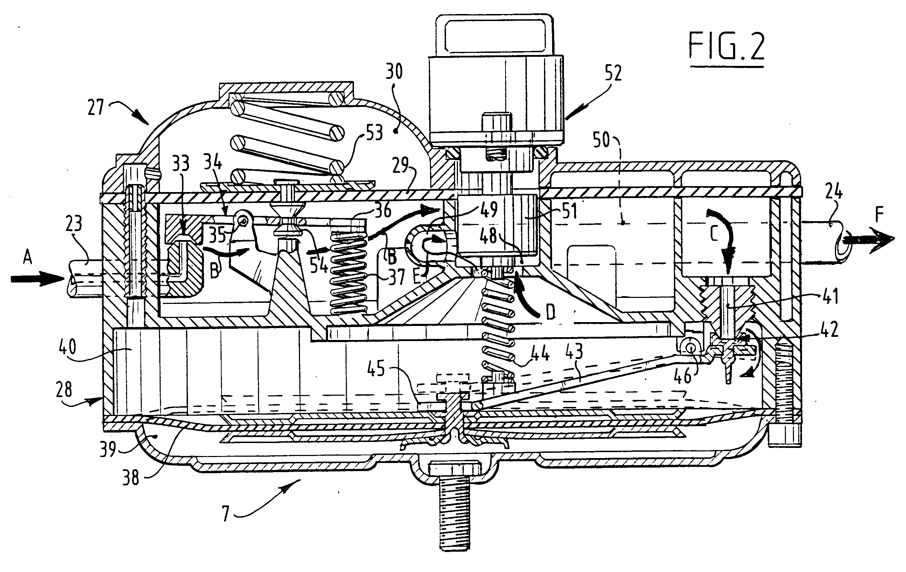

The evaporating and pressure regulating device 7 comprises a first stage 27 and a second stage 28 (fig. 2). The first stage 27 is provided with a reference pressure chamber 30 and a first evaporating space 31 which are mutually separated by a diaphragm 29. The first evaporator stage 27 is connected via a connecting piece 23 and the feed line 6 to the fuel tank 3. Connecting piece 23 debouches into an intake aperture 32 which protrudes into the evaporation space 31 and which can be closed by a valve 33. The latter is arranged on a lever 34 pivotable on a rotation point 35 and is connected on its outer end 36 located opposite valve 33 to a biasing spring 37. A spring 53 is likewise arranged between the diaphragm 29 and the roof of the reference pressure chamber 30. The evaporation space 31, which can be embodied for instance in the form of a volute, has an outlet aperture 41 which serves simultaneously as intake aperture for the second evaporation stage 28.

This second evaporation stage 28 likewise comprises a reference pressure chamber 39 and a second evaporation space 40 which are separated by a diaphragm 38. The centre of diaphragm 38 is connected to an outer end 45 of a lever 43 which actuates a valve 42 which can close the intake aperture 41. Lever 43, which is pivotable on a rotation shaft 46, is further connected to a biasing spring 44. This latter is in turn connected to a plunger 51 of a stepping motor 52, which motor 52 is connected for signal receiving to the electronic engine control unit 8 via a line 55 (fig. 1). The plunger 51 connected to stepping motor 52 is displaceable in a space 48 which communicates through an opening 47 with the second evaporation space 40 and which is connected via an opening 49 to an outlet tube 50 which debouches into a connecting piece 24 which can be connected to the second part of the fuel supply line 6 leading to the mixing device 5.

The operation of the evaporating and pressure regulating device 7 is as follows. The liquid gas from fuel tank 3 will flow according to arrow A via the connecting piece 23 to the intake aperture 32. The valve 33 of the intake aperture 32 will initially be open because the spring 53 presses diaphragm 29 downward and the pressure pin 54 connected thereto thus presses the outer end 36 of lever 34 downward counter to the tension of the spring 37. The lever 34 herein pivots round the rotation point 35, whereby valve 33 releases the intake aperture 32 and liquid fuel can flow into the evaporation space 31. Since the pressure in the evaporation space 31 is considerably lower than in the fuel container 3 and the line 6 the liquid fuel will at least partially evaporate, whereby the pressure in the chamber 31 increases. The diaphragm 29 is thereby pushed upward counter to the tension of spring 53, whereby valve 33 will close intake aperture 32 to an increasing extent. At constant operation of engine 2 a balanced state will be adjusted in the first evaporation stage 27, wherein the pressure of the meanwhile gaseous fuel in the first evaporation stage 27 depends on the characteristics of diaphragm 29 and spring 53.

When engine 2 is started an underpressure is created in the evaporation space 40 of the second evaporation stage 28 via the connection 24 which is connected to the air suction channel 4 of the engine. Since the outside air pressure prevails in the reference pressure chamber 39 of this stage 28 just as in reference pressure chamber 30 of the first stage 27, the diaphragm 38 will deform as shown with dashed lines in the drawing, whereby the outer end 45 of lever 43 pivots upward and round shaft 46 counter to the bias of spring 44 and the valve 42 will partly release the intake aperture 41. The substantially gaseous fuel can hereby flow out of the first evaporation stage 27 to the second evaporation stage 28 as indicated by arrow C. The gaseous fuel eventually flows from the second evaporation space 40 via the outlet apertures 47,48,49 to the outlet channel 50 and therefrom via the connection 24 to the mixing device 5 (arrows D,E and F).

The valve 42 of the second evaporation stage 28 is only opened when the underpressure in the suction channel 4 of the engine is such that the bias of spring 44 is overcome. In order to ensure a good gas supply, even when the underpressure in suction channel 4 is small, such as will be the case for instance during idling or partial load operation of the engine, the bias of spring 44 can be varied by means of the electronically controllable stepping motor 52. By moving the plunger 51 connected to the stepping motor upward the (pressure) spring 44 is released slightly so that a smaller underpressure in the suction channel 4 is sufficient to open valve 42. In the same manner extra fuel can be supplied to the engine after a cold start by regulating the tension of the spring 44.

During full load operation of the engine the tension of spring 44 plays only a subordinate role since the underpressure in the suction channel 4 is then so great that diaphragm 38 is moved to its outermost position which is determined by the reinforcing discs 56 arranged thereon on either side. The valve 42 is hereby fully opened whereby the supply of gas to the evaporation space 40 reaches a constant maximum value. In order under these conditions to still enable varying of the composition of the gas-air mixture reaching the engine the plunger 51 connected to the stepping motor 52 functions as throttle valve and closes the outlet apertures 47,49 a greater or lesser distance as required.

The displacement of stepping motor 52 is controlled, as already stated, by the electronic engine control unit 8 subject to the situation parameters of the engine measured by sensors 9,12,22. Stored in the engine control unit for this purpose is a table or so-called characteristics map in which is stored an optimum mixture composition, and therefore an optimum position of the stepping motor 52, for any combination of measured parameters. Because the gas flow is thus controlled electronically in this way in all load situations of the engine, the manual adjustments necessary in conventional LPG installations become superfluous, whereby good performance, a low fuel consumption and a minimum emission of harmful gases is ensured under all conditions.

Since the actual metered gas flow at a particular position of the stepping motor and determined measured engine parameters can vary from the gas flow according to the table as a result for instance of wear of the different mechanical components of the system, or because the composition of the gas used (often a mixture of propane and butane) can vary, the electronic engine control unit 8 is programmed such that it is "self-learning". This means that the engine control unit 8 checks on the basis of the measured composition of the exhaust gases whether the amount of fuel metered in the preceding time period corresponds with the desired amount. When the engine control unit detects that a determined difference between the demanded and actually metered amount is systematic, the table is automatically altered such that the difference is thereby compensated. The operation of the system is thus optimal over the entire lifespan thereof.

Although in the example a single stepping motor is described which functions as throttle valve in the outlet aperture and as adjusting mechanism for the spring tension, it is of course also conceivable to have these two functions performed by separate stepping motors, each of which is controlled by the electronic engine control unit. A single stepping motor with output shafts on either side could also be used when this would result in a more favourable position of the throttle valve.

## Claims

1. System (1) for metered supply to a combustion engine (2) of a fuel which is gaseous in ambient conditions, provided with a container (3) for storing the fuel in liquid form, a mixing device (5) arranged in an air intake channel (4) of the engine (2), a fuel supply line (6) connecting the container (3) to the mixing device (5), a device (7) arranged in the fuel supply line (6) for evaporating the fuel and regulating the pressure thereof, which evaporating and pressure regulating device (7) comprises at least one evaporation space (40) with a primary intake aperture (41) closable by a controllable valve (42) and an outlet aperture (47,48,49), wherein the valve (42) is controlled by an underpressure prevailing in the air intake channel (4) of the engine (2), and an adjustable throttle valve arranged between the evaporating and pressure regulating device (7) and the mixing device (5), **characterized in that** the throttle valve is electronically controllable and connected for receiving signals from an electronic engine control unit (8) and the and the evaporating and pressure regulating device (7) further has electronically controllable means for supplying an additional amount of fuel to the mixing device (5).

2. System (1) as claimed in claim 1, **characterized in that** the means for supplying an additional amount of fuel comprise a secondary intake aperture debouching in the evaporation space (40) and having an electronically controllable shut-off valve.

3. System (1) as claimed in claim 2, **characterized in that** the primary and secondary intake aperture (41) are formed integrally and are closable by a single valve (42) controllable both electronically and by the underpressure in the air intake channel (4).

4. System (1) as claimed in claim 3, **characterized in that** the valve (42) is connected controllably to a diaphragm (38) which is subjected to the underpressure in the air intake channel (4) and onto which further engages a spring (44) with electronically adjustable bias.

5. System (1) as claimed in claim 4**, characterized in that** the spring (44) is biased by an electronically controllable stepping motor (52).

6. System (1) as claimed in claim 5, **characterized in that** the throttle valve is driven by the stepping motor (52) biasing the spring (44).

7. System (1) as claimed in claim 6, **characterized in that** the stepping motor (52) is arranged close to the outlet aperture (47,48,49) of the evaporation space (40) and the throttle valve comprises a plunger (52) displaceable in the outlet aperture (47,48,49) and engaging on the spring (44).

8. Evaporating and pressure regulating device (7) for use in a system (1) as claimed in any of the foregoing claims, provided with at least one evaporation space (40) with a primary intake aperture (41) closable by a valve (42) controllable by underpressure and an outlet aperture (47,48,49), and electronically controllable means for delivering an additional amount of fuel.

9. Evaporating and pressure regulating device (7) as claimed in claim 8, **characterized in that** the means for delivering an additional amount of fuel comprise a secondary intake aperture debouching in the evaporation space (40) and having an electronically controllable shut-off valve.

10. Evaporating and pressure regulating device (7) as claimed in claim 9, **characterized in that** the primary and secondary intake aperture (41) are formed integrally and are closable by a single valve (42) controllable both electronically and by underpressure.

11. Evaporating and pressure regulating device (7) as claimed in claim 10, **characterized in that** the valve (42) is connected controllably to a diaphragm (38) which is subjected to an underpressure and onto which a spring (44) further engages with electronically adjustable bias.

12. Evaporating and pressure regulating device (7) as claimed in claim 11, **characterized in that** the spring (44) is biased by an electronically controllable stepping motor (52).

13. Evaporating and pressure regulating device (7) as claimed in claim 12, **characterized by** a throttle valve connected to the outlet aperture (47,48,49) and driven by the stepping motor (52) biasing the spring (44).

14. Evaporating and pressure regulating device (7) as claimed in claim 13, **characterized in that** the stepping motor (52) is arranged close to the outlet aperture (47,48,49) of the evaporation space (40) and the throttle valve comprises a plunger (52) displaceable in the outlet aperture (47,48,49) and engaging on the spring (44).
